Europäisches Patentamt

European Patent Office

Office européen des brevets

(19)

(11) Publication number: **0 263 181**
**A1**

## (12) EUROPEAN PATENT APPLICATION

published in accordance with Art. 158(3) EPC

(21) Application number: 86906935.1

(22) Date of filing: 19.11.86

Data of the international appli-
cation taken as a basis:

(86) International application number:
**PCT/JP 86/00589**

(87) International publication number:
**WO 87/03110 (21.05.87 87/11)**

(51) Int. Cl.⁴: **G 05 B 19/405**

(30) Priority: 19.11.85 JP 259368/85

(43) Date of publication of application: 13.04.88
**Bulletin 88/15**

(84) Designated Contracting States: DE FR GB

(71) Applicant: **FANUC LTD, 3580, Shibokusa Aza-Komanba
Oshino-mura, Minamitsuru-gun Yamanashi 401-05 (JP)**

(72) Inventor: **WATANABE, Atsushi, 27-304,
Tamadaira 3-chome, Hino-shi Tokyo 191 (JP)**
Inventor: **ISHIKAWA, Haruyuki, 25, Daikyo-cho,
Shinjuku-ku Tokyo 160 (JP)**

(74) Representative: **Billington, Lawrence Emlyn et al,
HASELTINE LAKE & CO Hazlitt House 28 Southampton
Buildings Chancery Lane, London WC2A 1AT (GB)**

(54) **APPARATUS FOR CONTROLLING ROBOT HAVING ALARM DISPLAY FUNCTION.**

(57) An apparatus for controlling a robot having an alarm
display function wherein a plurality of alarm conditions
detected by an error detecting unit (13) are stored in a
memory (14) for each generation of alarm together with
code numbers that indicate the cause of the alarm and
position numbers that indicate the positions where the
alarm is generated. All of the data thus stored are displayed
by means of a display control unit (15) on a display in the
order of alarm generation. When the alarm is generated,
therefore, the cause can be easily followed.

-1-

## DESCRIPTION

ROBOT CONTROL APPARATUS WITH ALARM DISPLAY FUNCTION

### Technical Field

This invention relates to a robot control apparatus having an alarm display function and, more particularly, to a robot control apparatus having an auxiliary function for pursuing the cause of an alarm when an alarm is generated.

### Background Art

A robot system comprises a robot body having a plurality of operating axes such as θ and U axes for performing such operations as welding and palletizing, and a controller consisting primarily of a numerical control unit. Many separated-type robot systems in which the robot body and controller are arranged separately are in use.

A controller of this kind has a teaching pendant for teaching the motions of the robot body in advance. In addition, the controller is provided with function keys, a key input section for inputting character data and numerical data, and a CRT display for displaying a program when programming is performed, the present positions of the robot axes and the fact that an alarm has been generated.

In conventional robot systems, error codes and alarm messages are displayed on the CRT and teaching pendant when a mistake is made in operating the robot, when an error is made is programming or when an abnormality develops in the servo system. Specifically, if an accident such as breakage of a safety coupling occurs, "SAFETY COUPLING BREAKAGE DETECTED" and an error code "003" indicative of this fact are displayed on the CRT. However, when troubles happen concurrently, such as the aforementioned breakage of the safety coupling and the closure of a breakage detection switch due to improper mounting of a hand, only the "SAFETY COUPLING BREAKAGE DETECTED" message and error code "003" are displayed on the CRT.

Thus, when a large variety of alarms are generated concurrently in the conventional robot system, only one of the alarms is displayed. Moreover, since a plurality of causes correspond to one error code, the exact cause of an error is not specified merely by an error code.

The present invention is an improvement over the aforementioned problems of the prior art and its object is to provide a robot control apparatus having an alarm display function in which when an abnormal condition occurs in a robot system, the causes of errors are displayed in their entirety in the order of occurrence so that the causes of the errors can be pursued.

Disclosure of the Invention

In accordance with the present invention, there is provided a robot control apparatus with an alarm display function comprising sensing means for sensing a plurality of alarm states of a robot, memory means responsive to generation of a signal from the detecting means for storing at least a code number indicating the cause of an alarm and a location number indicating an alarm occurrence location on a program whenever an alarm is generated, and display control means for displaying, on a display device in the order of occurrence, all information stored in the memory means.

Since the invention has the above-described construction, error codes and location numbers indicating alarm occurrence locations on a program are displayed when an alarm occurs. If a plurality of alarms occur at the same time, the stored information regarding all of the alarms can be displayed. This facilitates such countermeasures as the pursuit of causes when a robot comes to an emergency stop or when a service call is received from a user.

Brief Description of the Drawings

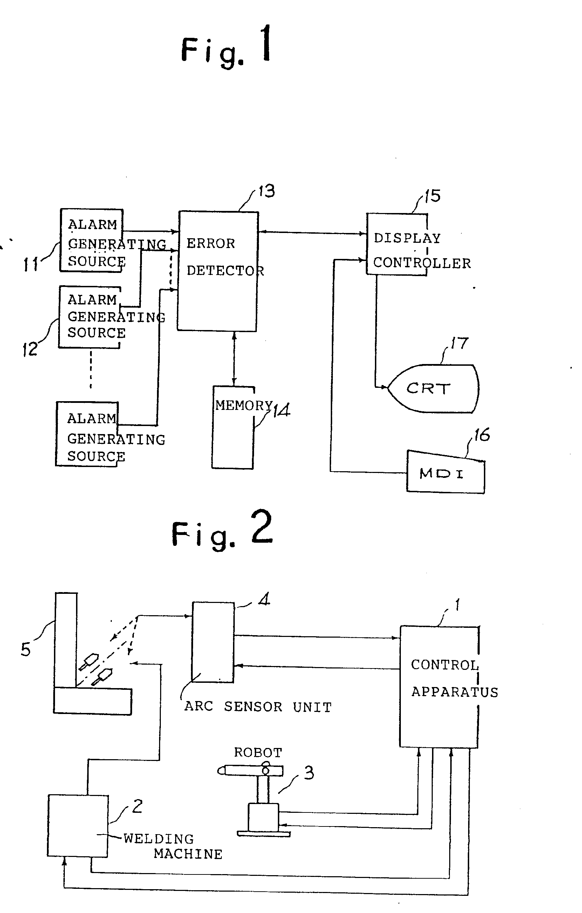

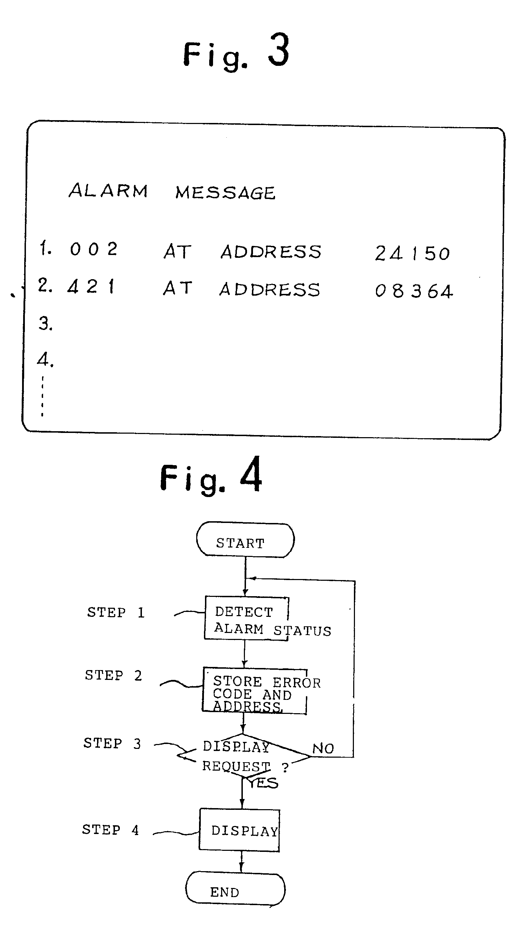

Fig. 1 is a block diagram illustrating an embodiment of a control apparatus according to the present invention, Fig. 2 is a block diagram illustrating an example of an arc sensor-type welding robot system, Fig. 3 is a view illustrating an example of error messages, and Fig. 4 is a flowchart for describing an alarm display operation performed by the control apparatus of the invention.

Best Mode for Carrying Out the Invention

An embodiment of the present invention will now be described in detail in conjunction with the drawings.

-4-

Fig. 1 is a block diagram illustrating an embodiment of a control apparatus according to the present invention, and Fig. 2 is a block diagram illustrating an example of an arc sensor-type welding robot system. In the Figures, numeral 1 denotes a control apparatus. The control apparatus 1 provides a welding machine 2 with a command specifying a welding current and voltage and applies a path control command to a welding robot 3. An arc sensor unit 4 receives a weaving double-end signal, a welding current command, and offset command and the like from the control apparatus 1. At playback, the arc sensor unit senses a positional deviation between a path traced by weaving of a torch 6 with respect to a workpiece 5 and a programmed welding line, and feeds back a path correction signal to the control apparatus 1.

If there is a programming error during teaching, a hardware-related malfunction or a difficulty in terms of the welding operation in the welding machine 2, robot 3 or arc sensor unit 4, the control apparatus 1 detects these problems on the basis of a status monitoring signal, causes alarms indicative of these problems to be displayed, and shuts down the entire robot system if necessary.

As shown in Fig. 1, the control apparatus 1 comprises an error detector for detecting alarm states from alarm generating sources 11, 12, ..., a memory 14 responsive to generation of a signal from the error detector 13 for storing, whenever an alarm is generated, an error code and a program address (a physical address) indicative of the location at which the error occurred, and a display controller 15. The control apparatus 1 also includes an input unit (MDI) 16 having operation keys such as alarm keys as well as numeric keys, and a display unit (CRT) 17.

A program for detecting a predetermined alarm is provided separately of a welding control program. The display controller 15 is so adapted that when the system develops an abnormality, an alarm lamp lights on the MDI 116 or on a teaching pendant, not shown, and when an alarm key on the MDI 116 is pressed by the operator, an alarm message of the kind shown in Fig. 3 is displayed on the CRT 17. This alarm message differs from that of the prior art in that a location number indicating the location of alarm occurrence on a program is displayed together with an error code stored in memory 14 and indicating the cause of the alarm, and in that information regarding all alarms generated so far is displayed at the same time.

More specifically, in the prior art, over-travel of the torch is indicated by the error code "002", and the cause is displayed together therewith in the form of an error message. In accordance with the present invention, however, the error code is displayed as well as the corresponding physical address of the software in which the error occurred. Based on the displayed

-6-

physical address, the user is capable of ascertaining the cause of the error. Even if an alarm from the same alarm generating source occurs at the same time, the respective causes can be specified.

Fig. 4 is a flowchart for describing an alarm display operation performed by the control apparatus of the invention.

When alarm detection software starts to be run in the control apparatus 1 at a step 1, alarm occurrence locations can be stored at a step 2 by storing consecutive numbers assigned to the program. Next, the error codes and alarm occurrence locations are displayed on the CRT 17 at a step 4 if there is a display request at a step 3 or automatically attendant upon shut-down of the system.

Thus, in accordance with the present embodiment, an error code and a program address indicating the location at which the error occurred are stored in the memory 14, in response to generation of a signal from the error detector 13, whenever an alarm is generated. When there is an alarm display request, error codes and the corresponding physical addresses on the software where the errors occurred are displayed on the CRT 17 in the order in which the errors developed. When operating mistakes happen concurrently or alarms overlap in the same group, the causes cannot readily be determined in the prior art. In accordance with the invention, however, the locations which are the causes

-7-

of the errors can be specified on the software, as described above, so that the causes of various difficulties can be determined reliably and with ease.

Therefore, in accordance with the invention, the display of alarm messages can be dispensed with and the causes of a plurality of problems can be preserved. This facilitates operability as far as the user is concerned.

Though described based on the illustrated embodiment, the invention is not limited to control of a welding robot. The invention can be modified and applied to various other NC apparatus without departing from the scope of the claims.

Industrial Applicability

If an error occurs in a robot system, the invention as described above is such that a code number indicating the cause of the alarm and a location number indicating the location on a program at which the alarm occurred are stored whenever an alarm is generated, and all code numbers and location numbers are displayed in the order in which the alarms occurred. Since this facilitates the pursuit of the causes of the alarms, the invention is well suited for application to industrial robot systems.

-8-

CLAIMS:

1. A robot control apparatus with a function for displaying alarms when a problem is detected, comprising:

sensing means for sensing a plurality of alarm states of a robot;

memory means responsive to generation of a signal from said detecting means for storing at least a code number indicating the cause of an alarm and a location number indicating an alarm occurrence location on a program whenever an alarm is generated; and

display control means for displaying, on a display device in the order of occurrence, all information stored in said memory means.

2. A robot control apparatus with a function for displaying alarms according to claim 1, characterized in that a program for alarm detection is run by operator manipulation when an alarm is generated.

3. A robot control apparatus with a function for displaying alarms according to claim 1, characterized in that a program for alarm detection is run automatically in response to a detection signal indicating generation of an alarm.

4. A robot control apparatus with a function for displaying alarms according to claim 1, characterized in that location numbers indicating alarm occurrence locations on a program are consecutive numbers assigned to the program.

## Fig. 1

```
┌──────────┐
│  ALARM   │
│GENERATING│──────┐         ╭13────────╮        ╭15──────────╮
│  SOURCE  │      │         │          │        │ DISPLAY    │
└──────────┘      └────────▶│  ERROR   │◀──────▶│ CONTROLLER │
11                          │          │        │            │
                  ┌────────▶│ DETECTOR │        └────────────┘
┌──────────┐      │         │          │              │
│  ALARM   │      │         │          │              │
│GENERATING│──────┤         │          │              │
│  SOURCE  │      │         └──────────┘              │
└──────────┘      │              ▲                    ▼    ╭17
12                │              │                  ╭─────────╮
        ·         │              │                  │  CRT    │
        ·         │              │                  ╰─────────╯
        ·         │              ▼
┌──────────┐      │         ┌──────────┐                ╭16
│  ALARM   │      │         │MEMORY 14 │            ╭─────────╮
│GENERATING│──────┘         │          │            │  MDI    │
│  SOURCE  │                └──────────┘            ╰─────────╯
└──────────┘
```

## Fig. 2

# Fig. 3

```
ALARM   MESSAGE

1. 0 0 2    AT   ADDRESS     2 4 1 5 0
2. 4 2 1    AT   ADDRESS     0 8 3 6 4
3.
4.
 ⋮
 ⋮
```

# Fig. 4

```
                    START
                      │
          ┌───────────┤◄──────────┐
STEP 1 ─┐ │   DETECT             │
          │ │ ALARM STATUS        │
          └─┴───────────┤         │
                        │         │
STEP 2 ─┐ ┌─────────────┤         │
          │ │ STORE ERROR         │
          │ │ CODE AND            │
          └─┴─ADDRESS───┤         │
                        │         │
STEP 3 ─┐   DISPLAY         NO    │
          └─<REQUEST ?>───────────┘
                   │ YES
STEP 4 ─┐  ┌───────┤
          └─┤ DISPLAY
            └───────┤
                    │
                  END
```

# INTERNATIONAL SEARCH REPORT 0263181

International Application No. PCT/JP86/00589

## I. CLASSIFICATION OF SUBJECT MATTER (if several classification symbols apply, indicate all) [3]

According to International Patent Classification (IPC) or to both National Classification and IPC

Int.Cl$^4$  G05B19/405

## II. FIELDS SEARCHED

| Minimum Documentation Searched [4] | |
|---|---|
| Classification System | Classification Symbols |
| IPC | G05B19/18-19/42, 23/00-23/02 |

| Documentation Searched other than Minimum Documentation to the Extent that such Documents are Included in the Fields Searched [5] | |
|---|---|
| Jitsuyo Shinan Koho | 1926 – 1987 |
| Kokai Jitsuyo Shinan Koho | 1971 – 1987 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | JP, A, 59-140519 (Mitsubishi Electric Corporation) 11 August 1984 (11. 08. 84) Page 2, upper right column, line 2 to lower left column, line 7, (Family: none) | 1-4 |
| Y | JP, A, 59-201110 (Toshiba Corp.) 14 November 1984 (14. 11. 84) Page 3, lower left column, line 18 to lower right column, line 10, (Family: none) | 1-4 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| February 9, 1987 (09. 02. 87) | February 23, 1987 (23. 02. 87) |
| International Searching Authority [1] | Signature of Authorized Officer [20] |
| Japanese Patent Office | |

Form PCT/ISA/210 (second sheet) (October 1981)